# EUROPÄISCHE PATENTSCHRIFT

(11) **EP 3 146 308 B1**
(45) Veröffentlichungstag und Bekanntmachung des Hinweises auf die Patenterteilung: **06.10.2021**
(21) Anmeldenummer: 15749713.2
(22) Anmeldetag: 12.05.2015
(51) Int. Cl.: G01N 15/02, G01N 21/03, G01N 21/47, G01N 27/447, G01N 15/00, G01N 15/10

(54) **VERFAHREN DER PARTIKEL TRACKINQ ANALYSE MIT HILFE VON STREULICHT (PTA) UND EINE VORRICHTUNG ZUR ERFASSUNG UND CHARAKTERISIERUNG VON PARTIKELN IN FLÜSSIGKEITEN ALLER ART IN DER GRÖSSENORDNUNG VON NANOMETERN**
PARTICLE TRACKING ANALYSIS METHOD USING SCATTERED LIGHT (PTA) AND DEVICE FOR DETECTING AND IDENTIFYING PARTICLES OF A NANOMETRIC ORDER OF MAGNITUDE IN LIQUIDS OF ALL TYPES
PROCÉDÉ D'ANALYSE DE SUIVI DE PARTICULES (PTA) À L'AIDE DE LUMIÈRE DISPERSÉE ET DISPOSITIF POUR DÉTECTER ET CARACTÉRISER DES PARTICULES DE L'ORDRE DE GRANDEUR DES NANOMÈTRES DANS DES LIQUIDES DE TOUS TYPES

(30) Priorität: 19.05.2014 DE 102014007355
(43) Veröffentlichungstag der Anmeldung: 29.03.2017
(73) Patentinhaber: Particle Metrix GmbH, 40668 Meerbusch (DE)
(72) Erfinder: WACHERNIG, Hanno, 86911 Dießen a. A. (DE); BÖCK, Margret, 40668 Meerbusch (DE)
(74) Vertreter: Kindermann, Peter
(86) Internationale Anmeldenummer: PCT/DE2015/000241
(87) Internationale Veröffentlichungsnummer: WO 2015/176698

(56) Entgegenhaltungen:
- CN-A- 102 593 711
- DE-A1- 2 603 221
- DE-B3-102008 007 743
- DE-T2- 69 123 957
- JP-A- S5 555 240
- JP-A- S57 122 347
- US-A- 4 180 739
- US-A- 4 242 194
- US-A1- 2007 163 884
- None

## Beschreibung

Die Erfindung betrifft ein Verfahren der Partikel Tracking Analyse mit Hilfe von Streulicht und eine Vorrichtung zur Erfassung und Charakterisierung von Partikeln in Flüssigkeiten aller Art in der Größenordnung von Nanometern.

Suspensionen und Emulsionen als disperse Stoffsysteme sind häufig vorkommende Formen von Partikeln in Flüssigkeiten. Ihre Anwendungen reichen von der Druckertinte über kosmetische Emulsionen bis hin zu neuen Materialien wie Quantum Dots. Weiters sind Nanobläschen, Teilchen in Gewässern, Teilchen in pharmazeutischen Verabreichungen und Exosomen, - das sind von Körperzellen ausgesandte Nanopartikel mit Botschafterfunktion - zu Partikeln in Flüssigkeiten zu zählen. Die Partikel kommen vor als einzelne original vorkommende Objekte oder als Ansammlungen in Form von Agglomeraten oder Aggregaten. In Agglomeraten haben die einzelnen Bestandteile eine lose Bindung zueinander, während Aggregate nur noch durch starke Kräfte, zum Beispiel durch Mahlvorgänge, voneinander zu trennen sind.

Es besteht ein großes Interesse daran, die Teilchen in ihrer Größe, Form und als Agglomerat oder Aggregat zu quantifizieren und Mischungen davon quantitativ zu erfassen. Im Bereich bildgebender Verfahren ist dies möglich, im optischen Mikroskop bis zu einer Größe von einigen 100 nm, im Elektronenmikroskop bis zu einer untersten Größe von einigen nm. In keinem Verfahren jedoch kann man bisher zwischen Agglomeraten und Aggregaten unterscheiden. Die elektronenmikroskopische Untersuchung leidet unter der aufwändigen Probenaufbereitung, der Dauer und den Kosten der Analyse.

Die optische Streulichtanalyse ist im Gegensatz zur optischen Mikroskopie und Elektronenmikroskopie ein indirektes Messverfahren zur Charakterisierung der Partikelgröße. Sie wird verwendet, weil Partikel von weniger als 1 µm (1000nm) wegen der Beugungsbegrenzung der direkten Beobachtung entgehen.

In einem Streulicht-Mikroskop wird das von Partikeln gestreute Licht zur Lokalisierung der Partikel und der Verfolgung ihrer Bewegung in einem Videofilm herangezogen. Von Streulichtmikroskopen gibt es zwei Versionen, das Dunkelfeldstreulichtmikroskop mit Weißlichtbeleuchtung und das Dunkelfeld - Laser Streulichtmikroskop mit Laserbeleuchtung (nachfolgend abgehandelt).

Durch Analyse der translatorischen Brown'schen Diffusionsbewegung jedes einzelnen Teilchens und die nachfolgende Umrechnung der gemessenen Diffusionskonstanten an jedem einzelnen Teilchen in die Partikelgröße durch die Stokes - Einstein - Formel wird die Partikelgrößenverteilung abgeleitet.

Bei Anlegen eines elektrischen Feldes an das disperse Stoffsystem erhält man zusätzlich die elektrophoretische Wanderbewegung und daraus die elektrische Ladung an der Partikelgrenzfläche zur umgebenden Flüssigkeit. Mit Hilfe zum Beispiel der Smoluchowsi - Formel wird die gemessene elektrophoretische Mobilität in das sogenannte Zetapotential umgerechnet. Dazu folgende Betrachtung:

Disperse Systeme sind bekanntermaßen den thermodynamisch instabilen Systemen zuzuordnen. Die Zeitdauer in der solche Dispersionen stabil bleiben, ist für die Anwendbarkeit von wesentlicher Bedeutung. Eine sehr oft zu beobachtende Instabilität entsteht durch Koagulation von Teilchen, die zu irreversiblem Partikelgrößenwachstum, bzw. zu völliger Trennung zwischen flüssiger Phase und Partikelphase führen kann. Zur Verminderung der Koagulation dienen mehrere Vorkehrungen. Eine davon ist die elektrostatische Stabilisierung. Dabei macht man sich zunutze, dass die Annäherung gleichsinnig geladener Teilchen durch deren elektrostatische Abstoßung erschwert wird. Diese Abstoßung ist umso effizienter, je höher die ionische Ladung der Teilchen auf ihrer Grenzfläche zum Medium ist. Maßgebend hierfür ist das elektrostatische Partikel-Grenzflächenpotential "PGP", insbesondere das häufig von der elektrophoretischen Bewegung abgeleitete Zetapotential (siehe oben). Dieses Potential wird als ein Maß angesehen, das den Grad der Abstoßung zwischen benachbarten dispergierten Partikeln bestimmt. Es hat somit Bedeutung hinsichtlich der Stabilität disperser Systeme.

Bei den oben beschriebenen Streulicht - Anordnungen ist die Probe äußerlich in Ruhe, nur die Teilchen im Innern der Probe bewegen sich typisch entsprechend ihrer Größe und Form.
1) Die Wirkung von Partikeln liegt unter anderem in ihrer Größenordnung. So kann die Brillanz einer Farbe unter anderem von der Größenverteilung abhängig sein, der Ort der Wirkung einer pharmazeutischen Verabreichung von der Größe des Trägerpartikels, zum Beispiel eines Liposomentröpfchens oder von mit Proteinen beschichteten Goldpartikeln.
2) Weiterhin gibt die Größe von Partikeln Auskunft über ihre Qualität, Einheitlichkeit und Einsetzbarkeit. Sind zum Beispiel zu viel Agglomerate einer Partikelsorte (Proteine) vorhanden oder andersartige Stoffe beigemischt, so stellt sich ihre Verwendbarkeit in Frage.
3) Auch die Partikelform stellt ein wichtiges Diskriminierungsmerkmal dar. In homogenisierter Milch zum Beispiel sind die Fetttröpfchen auf die Größe der Kaseinteilchen zu 300 nm zerkleinert. Der Unterschied zwischen beiden Anteilen besteht nur in der Form. In gängigen Größenmessverfahren DLS, Dynamische Lichtstreuung, Scheibenzentrifuge und Ultraschallspektroskopie können Fetttröpfchen und Kasein nicht voneinander unterschieden werden. Die Partikelform von Partikeln unterhalb einer Größe von ca. 1 µm ist bisher nur mit Hilfe der Elektronenmikroskopie messbar. Allerdings nur statisch und nach einer massiven Probenaufbereitung. Eine dynamische in-situ-Beobachtung der Partikel in der Trägerflüssigkeit ist nicht möglich.
4) Die Unsicherheit über die Richtigkeit des Ergebnisses einer Größenverteilung hängt bei den gängigen DLS Streulichtverfahren damit zusammen, dass das vom Streulichtvolumen ausgehende Streulicht auf einem einzigen Detektorelement kollektiv gesammelt wird. Die Fluktuation des Streulichtsignals wird zur Größenverteilung herangezogen. Dabei kann nicht unterschieden werden, ob die Fluktuation von der translatorischen Bewegung der Teilchen herrührt, auf welcher die Berechnung der Partikelgröße nach Umrechnung mit Hilfe der Stokes-Einstein-Gleichung beruht, oder von der Rotation von unförmigen Teilchen. Denn die Schwerpunktsveränderungen eines rotierenden Teilchenaggregates zum Beispiel tragen zum kollektiven Streulichtsignal bei und führen zu einem "parasitären" Feinanteil, der aber nicht als solcher erkannt werden kann. Eine zusätzliche Unsicherheit entsteht bei Stoffgemischen, deren Streulichtverhalten unterschiedlich ist. Bei Stoffmischungen kommt es deshalb zu einer Fehlbeurteilung der verschiedenen Anteile. Sind die Partikel der unterschiedlichen Stoffe gleich groß, kann erst gar nicht vermutet werden, dass mehr als eine Stoffart in der Probe vorhanden ist und schon gar nicht, welche Anteile davon vorhanden sind.
5) Im Elektronenmikroskop als bildgebendem Verfahren ist die Form messbar. Es lassen sich aber Agglomerate nicht von Aggregaten auseinanderhalten.
6) Deshalb ist es wünschenswert ein Verfahren zu entwickeln, das ähnlich wie ein Elektronenmikroskop Mustererkennung bietet, jedoch wesentlich schneller und preiswerter ist und nur wenig Risiko zur Probenveränderung durch die Aufbereitung der Probe zur Messung beinhaltet.
7) Des Weiteren ist es wünschenswert aus der diskreten Analyse der einzelnen Teilchen, die per Videofilm verfolgt werden, möglichst viele Merkmale zu unterscheiden. Denn während der Ortsveränderung der Teilchen, zum Teil auch aus dem Mikroskopfokus heraus, nehmen die Partikel eine ständig wechselnde Orientierung zum beobachtenden Mikroskop ein. Dabei werden hohe Intensitätsschwankungen der einzelnen Partikel festgestellt. Alle diese Erscheinungen werden zwar klassisch als eine Schwierigkeit der Partikel Tracking Messmethode angesehen. Positiv gesehen bieten diese Schwierigkeiten jedoch die immense Chance a) die Translation der Partikel von der Rotation zu unterscheiden und damit parasitäre Feinanteile auszuschließen und b) eine Menge zusätzlicher Information aus dem dynamischen Verhalten der Partikel während ihrer Reise im Videofilm abzuleiten. Dies unterscheidet sich von den anderen Methoden wie DLS, Elektronenmikroskopie und Scheibenzentrifuge.
8) In dieser Erfindung wird also die dynamische Multiparameter - Analyse als Vorteil genutzt, um aus der geschilderten Dynamik noch mehr als bisher möglich wertvolle Informationen zu gewinnen.
9) Eine große Schwierigkeit im PTA - Verfahren bleibt die Tatsache, dass zur Analyse von Nanopartikeln ein enorm hoher Lichtkontrast (Signal/Rausch-Verhältnis im Videodetektor) hergestellt werden muss, denn die Lichtstreuung der Nanopartikel nimmt zu kleineren Durchmessern hin mit der 6. Potenz ab. Vor allem ist darauf zu wirken, dass der Lichtkontrast der schwach leuchtenden Partikel zum Untergrund maximal ist und nicht durch Störlicht geschwächt wird. Mit einer empfindlichen Kamera alleine ist es nicht getan. In einer Streulichtanordnung ist immer parasitäres Licht durch Reflexe des anregenden Laserlichts an Kanten und Zellwänden vorhanden, das auch auf irgendeine Weise seinen Weg in die Videokamera findet. Der Vergleich zum optimalen schwarzen Nachthimmel bei der Sternenbeobachtung ist naheliegend. Die Erfindung von Maßnahmen zur Kontrastverbesserung dient dazu, die dynamische Mustererkennung an Nanopartikeln in einem möglichst weiten Größenbereich durchführen zu können.
10) Eine weitere Schwierigkeit der PTA Messtechnik ergibt sich aus der Tatsache, dass mit einer Kameraeinstellung jeweils nur ein kleiner Größenmessbereich von maximal 8 zu 1 gleichzeitig aufgenommen werden kann. Bei Proben mit einer breiteren Partikelgrößenverteilung sind bis zu 3 Probenverdünnungsstufen a 1:3 bis 1:4 mit bis zu 3 unterschiedlichen Kameraeinstellungen nötig. Eine Verdünnungsautomatik kombiniert mit einer intuitiven Kameraeinstellung würde die Messung wesentlich vereinfachen und beinah fehlerfrei von der Bedienung her gestalten. Die zusätzliche Anbringung einer Miniatur pH - Sonde ist ein weiterer Schritt in Richtung Automatik. Bei den meisten Anwendern von PTA geht es um biochemisch medizinische Diagnosen. Hier geht es um kleinste Probenmengen und oft um Personal, das mit neuartigen Analysemethoden Schwierigkeiten hat. Bei Proben mit der Notwendigkeit Zetapotential zu messen ist es wichtig die ionischen Eigenschaften der Umgebungsflüssigkeit zu messen und zu registrieren. Die beiden wichtigen Parameter welche den ionischen Zustand in der Umgebung der Partikelgrenzfläche charakterisieren, sind Leitfähigkeit und pH. Sie sollen automatisch und ohne Zutun des Personals mit registriert werden.

Aus der Druckschrift DE 691 23 957 T2 ist ein HPLC-Lichtstreuungsdetektor für Biopolymere bekannt, wobei in einer Strömungszelle bzw. Durchflusszelle insbesondere ein Molekulargewicht eines Teilchens bestimmt wird.

Aus der Druckschrift JP S55 55240 A ist eine weitere herkömmliche Durchflusszelle bekannt, bei der zur Erhöhung einer Messgenauigkeit schwarzes Glas am Boden und an den Seitenwänden der Durchflusszelle verwendet wird.

Aus der Druckschrift US 4 180 739 A ist eine weitere herkömmliche Durchfluss-Messzelle bekannt, bei der eine Fluoreszenz-Messung unter präziser Temperaturkontrolle des zu untersuchenden Flüssigkeitsstromes durchgeführt wird.

Ferner ist in der Druckschrift DE 26 03 221 A1 ein Verfahren und eine Vorrichtung zur Bestimmung der granulometrischen Verteilung in Mischungen beschrieben, wobei der Durchmesser von in einer suspensionsartigen Flüssigkeit enthaltenen Teilchen bestimmt werden kann. Zur Vermeidung von störenden Einflüssen auf das optische System werden hierbei Vibrationsdämpfer eingesetzt.

Die Druckschrift US 4 242 194 A1 offenbart eine elektrophoretische Messvorrichtung, wobei die Geschwindigkeit von Teilchen in einer Flüssigkeit auf der Grundlage von abgegebener elektromagnetischer Strahlung gemessen wird. Hierbei können Elektroden zum Erzeugen eines elektrischen Feldes mit einer Spannung versorgt werden.

Die Druckschrift US 2007/163884 A1 beschreibt ein Verfahren und eine Vorrichtung zur Bestimmung des isoelektrischen Punktes eines geladenen Analyts, wobei aus einem Vorratsbehälter und dem Probenbehälter Flüssigkeiten einer Mischkammer dosiert zugeführt werden können, und wobei im Bereich der Mischkammer eine pH-Messsonde angebracht ist.

Die Druckschrift CN 102 593 711 A3 zeigt eine Nano-Carbon-Schicht als Kühlkörper in einem Halbleiterlaser.

Weiterhin offenbart die Druckschrift JP S57 122347 A die Anwendung einer Carbon-Schicht als Heizelement.

Aus der den Oberbegriff des Patentanspruchs 1 bildenden Druckschrift DE 10 2008 007 743 B3 ist eine Vorrichtung zur Erfassung und Charakterisierung von Partikeln in Flüssigkeiten aller Art in der Größenordnung von Nanometern bekannt, mit einer Zelle mit einer Zellwandung, wobei die Flüssigkeit sich als Suspension in der Zelle befindet, wobei die Zellwandung einen rechteckigen Querschnitt aufweist, und wobei die Zellwandung auf einer Querfläche auf einem Standsockel aufliegt. Eine Bestrahlungseinrichtung bestrahlt die Zellwandung auf der Querfläche, die der Querfläche, die das Auflager der Zellwandung bildet, gegenüberliegt, in der Mitte durch ein optisches Glasfenster. Eine Beobachtungseinrichtung beobachtet hierbei im rechten Winkel zur optischen Achse der Bestrahlungseinrichtung durch ein weiteres optisches Glasfenster, während eine Steuerungsvorrichtung den gemeinsamen Fokus der Bestrahlungseinrichtung und den Fokus der Beobachtungseinrichtung motorisch über den räumlichen Innenbereich der Zellwandung in einen beliebigen Punkt verfährt. Die Fläche der Zellwandung, die dem optischen Glasfenster durch das die Bestrahlungseinrichtung einstrahlt, gegenüberliegt, weist in der Mitte ein weiteres optisches Glasfenster auf.

Diese Vorrichtung ist zwar universell einsetzbar, jedoch bei der Messung von Nanopartikeln durch Streulicht oder Fluoreszenzlicht begrenzt durch den Störlichthintergrund.

Der Erfindung liegt die Aufgabe zugrunde, eine Vorrichtung und ein Verfahren zur Erfassung und Charakterisierung von Partikeln in Flüssigkeiten aller Art in der Größenordnung von Nanometern zu schaffen, wobei Störeinflüsse verringert sind.

Erfindungsgemäß wird diese Aufgabe hinsichtlich der Vorrichtung durch die kennzeichnenden Merkmale des Patentanspruchs 1 und hinsichtlich des Verfahrens durch die Maßnahmen des Patentanspruchs 4 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
- Fig.1:: einen Querschnitt der Zellwandung und eine räumliche Ansicht
- Fig.2:: eine räumliche Ansicht der Zelle mit peripheren Anordnungen
- Fig.3:: eine räumliche Ansicht der Zelle in einer Sonderbauform
- Fig.4:: eine Darstellung zur Verdeutlichung des Messprinzips

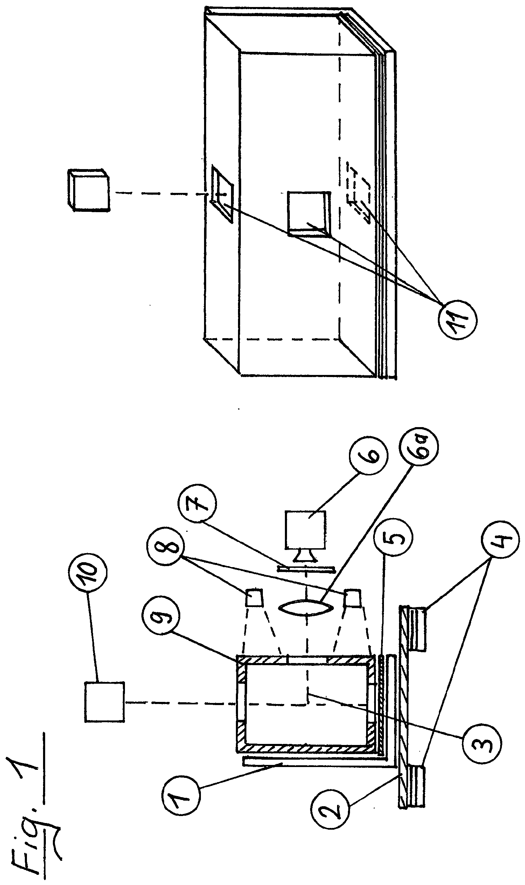

Die Fig.1 zeigt einen Querschnitt der Zellwandung und eine räumliche Ansicht.

Die, die zu untersuchende Suspension beinhaltende, im Querschnitt rechteckig gestaltete, Zellwandung 9 steht mit ihrem Querschnitt im Mittelpunkt des linken Teils dieser Figur. Diese Zellwandung 9 wird auf der linken Seite von einem, im Querschnitt L - förmigen, Heiz - und Kühlelement 1 umfasst, dessen Funktion später noch näher beschrieben wird. Die gesamte Vorrichtung ist auf einem Standsockel 2 gelagert, der wiederum mittels schwingungsdämpfenden Elementen 4 gegen Erschütterungen aus dem Bereich der Umgebung gesichert ist. Zur Beleuchtung der Suspension ist an der Oberseite der Zellwandung 9 ein Laser 10 vorgesehen, dessen prinzipieller Strahlenverlauf durch eine gestrichelte Linie die in der Mitte durch die Zellwandung 9 führt, angedeutet. Der Strahl des Lasers 10 trifft, nachdem er die Zellwandung 9 über eine, als durchlässig dargestellte Öffnung, durchlaufen hat, auf die Gegenseite der Zellwandung 9 und wird dort von einer Nano - Carbon -Schicht 5, die sich ebenfalls hinter einer, als durchlässig dargestellten Öffnung, befindet, aufgenommen und wärmetechnisch neutralisiert. Die Funktion der Schicht 5 wird später noch beschrieben. Im rechten Winkel zu dieser gestrichelten Linie ist die optische Achse 3 einer digitalen Videokamera 6 und eines Mikroskopobjektivs 6a, ebenfalls mittels einer gestrichelten Linie, angedeutet.

Auch diese optische Achse 3 durchläuft eine, als durchlässig dargestellte, Öffnung. Im Schnittpunkt dieser beiden gestrichelten Linien sind die zu untersuchenden Partikel beobachtbar. Im Strahlengang der digitalen Videokamera 6 ist ein Filterwechsler 7 vorgesehen, der, jeweils nach Anforderung, verschiedene Farbfilter dem Objektiv der Kamera 6 vorschalten kann. Des Weiteren ist im Strahlengang der digitalen Videokamera ein Mikroskop - Objektiv 6a angeordnet. Auf dieser Seite des von der digitalen Videokamera 6 beobachteten Teils der Zellwandung 9 sind zwei Thermistoren 8 vorgesehen, die die Wärme - Entwicklung der Zellwandung registrieren.

Im rechten Teil der Fig.1 ist eine räumliche Ansicht der Zellwandung 9 dargestellt, aus der die Anordnung der auf der linken Seite der Fig.1 gezeigten Öffnungen besser ersichtlich ist. Die vorher beschriebenen Öffnungen stellen optische Glasfenster 11 dar, die in die Zellwandung 9 eingesintert sind. Zur Erzielung einer gleichmäßigen Temperaturverteilung in der Zelle dienen das Heiz - und Kühlelement 1 und die Nano - Carbon - Schicht 5. Diese Schicht 5 leitet die von dem Laser 10 beim Austritt des Lasers aus der Zellwandung 9 durch das Fenster 11 verursachte Wärmestrahlung sofort seitlich und in das Kühlelement 1 ab. Damit wird Wärmekonvektion in der Zelle weitgehend vermieden. Wärmekonvektion ist zur zu messenden Partikeldiffusion und elektrophoretischen Bewegung im Feld konkurrierend, deshalb zu vermeiden.

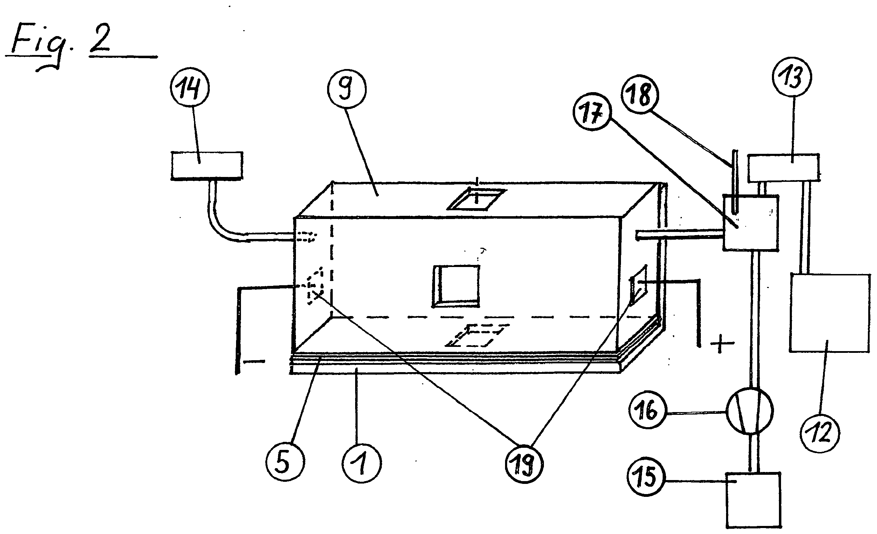

Die Fig.2 zeigt eine räumliche Ansicht der Zelle mit peripheren Anordnungen. Neben der bekannten Zellwandung 9 mit ihren eingesinterten optischen Glasfenstern 11 sind hier das Heiz - und Kühlelement 1 und die am Boden der Zellwandung 9 angebrachte Nano - Carbon - Schicht 5 zu erkennen. An den beiden Schmalseiten der Zellwandung 9 ist jeweils eine negative und eine positive Elektrode 19 angebracht. Diese Elektroden 19 bestehen jeweils aus zwei Elektroden, wobei sich jeweils eine äußere Elektrode außerhalb der Zellwandung 9 und eine zugehörige innere Elektrode. an der das betreffende elektrische Feld abgegriffen wird, innerhalb der Zellwandung 9 befindet. Auf diese Weise werden Störeffekte wie Blasenbildung ausgeglichen. Durch das Anlegen einer regelbaren elektrischen Spannung kann hiermit die elektrophoretische Bewegung zu untersuchender Partikel bewirkt werden. Auf der rechten Schmalseite der Zellwandung 9 sind zwei Dosierpumpen 13 und 16 für die Zufuhr von Spül- bzw. Verdünnungslösung oder Suspension aus einem Vorratsbehälter 12 bzw. 15 vorgesehen. Auf der linken Schmalseite der Zellwandung 9 ist ein Ausgleichsbehälter 14 angebracht. Auf der rechten Schmalseite befindet sich ebenfalls eine Miniatur - Mischkammer 17 zur Aufnahme der Probensuspension aus 12 oder von einer Spritze. Bei gleichzeitiger Zudosierung von Probe und Verdünnungslösung aus den Behältern 12 und 15 wird eine definierte Verdünnung der Probe erreicht. An einem Ausgang der Mischkammer (17) ist eine Miniatur - pH - Messsonde 18 angebracht.

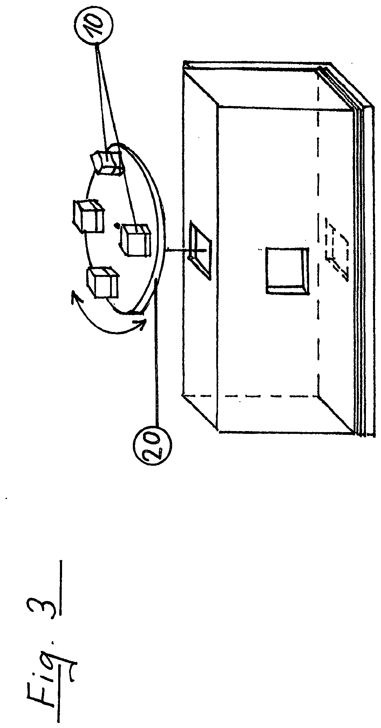

Die Fig.3 zeigt eine räumliche Ansicht der Zelle in einer Sonderbauform. Hier wird prinzipiell und beispielhaft dargestellt, wie mittels einer drehbaren Wechselscheibe 20 wahlweise ein bestimmter Laser 10 aus einer Mehrzahl ausgewählt werden kann und rasch, jeweils nach Erfordernis, zur Untersuchung einer bestimmten Suspension eingesetzt werden kann. Die Wechselscheibe 20 kann auch ein horizontal beweglicher Verschiebeschlitten sein.

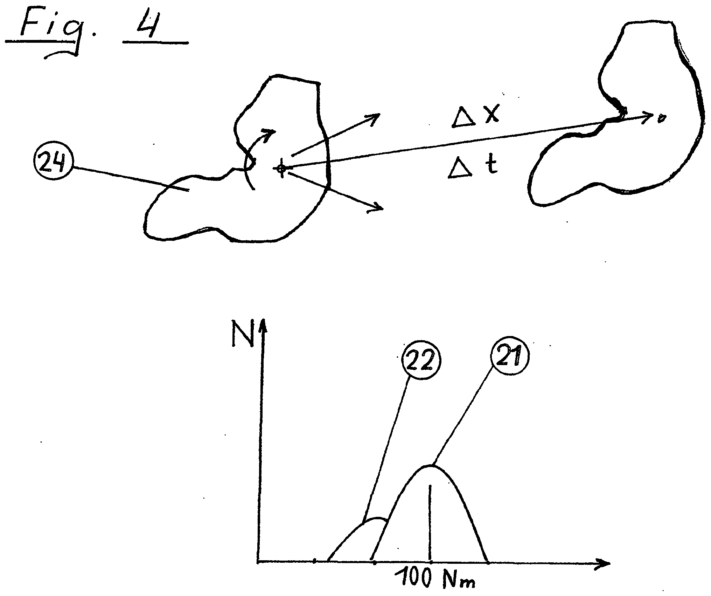

Die Fig.4 zeigt eine Darstellung zur Verdeutlichung der Möglichkeiten des erfindungsgemäßen Messprinzips. Am Beispiel eines, als unregelmäßiges Konglomerat dargestellten, Partikels 23 mit einem Durchmesser von 100 nm wird hier gezeigt, dass sich dieses Partikel 23, wenn es sich in einer Zeit Delta t um eine Strecke Delta x bewegt hat, nicht nur als Größen - Peak 21 bei der Untersuchung bemerkbar macht, sondern dass ein weiterer, kleinerer Größen - Peak 22, der bisher meist unbeachtet blieb, ebenfalls zielsicher gedeutet werden kann. Denn während bisher, wie schon gesagt, der kleinere Peak 22 meist übersehen wurde oder dem Einfluss eines kleineren Partikels zugeschrieben wurde, ist es mit dem erfindungsgemäßen Verfahren möglich zu erkennen, dass der kleinere Peak 22 dem Einfluss der Rotation des Partikels 23 zuzuschreiben ist.

Es handelt sich insgesamt um eine erstmalige und automatische Auswertung der dynamischen Streulichtmuster - Analyse. Es werden hierbei die Anzahl der Primärpartikel, Agglomerate und Aggregate ermittelt. Es erfolgt eine Auswertung der Streulicht - Formparameter (sekundäre Formparameter), eine Auswertung der Intensität des Partikel - Streulichts, der Partikel - Streulichtfläche und aller dynamischen Werte hiervon. Hieraus ergibt sich die Schwankungsbreite dieser Parameter. Zudem ist eine Auswertung der Anteile unterschiedlicher Partikelsorten möglich (Beispiel Milch: Milchtröpfchen, Milchexosome, Kaseine (Beispiel Mischung Partikel und Nanobläschen).

Die komplexe Analyse der beschriebenen Bewegungsabläufe erfordert ein spezielles Steuerungsprogramm.

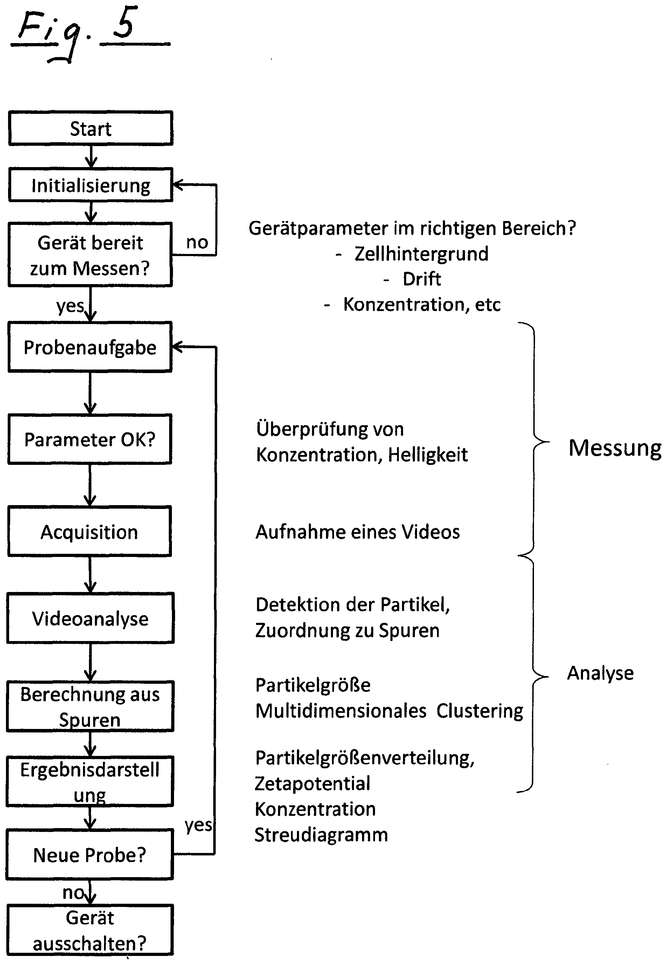

Die Fig.5 zeigt ein Flussdiagramm des erfindungsgemäßen Bearbeitungsverfahrens..

In der Fig.5 werden die wesentlichen Verfahrensschritte die sich bei der Messung und der Analyse mit der erfindungsgemäßen Vorrichtung unterscheiden lassen aufgezeigt.

Nach dem Start und der Inbetriebnahme initialisiert sich die Vorrichtung, bzw. das Gerät. Hierbei werden alle Sensoren und Aktoren angesprochen und deren Referenzwert ausgelesen. Liegen die auf diese Weise ermittelten Referenzwerte der einzelnen Gerätebestandteile in dem, ihnen vorgegebenen, Bereich, ist das Gerät für eine Messung bereit.

Als Vorbereitung für eine Probenaufgabe werden dann zuerst Referenzmessungen mit reinem Wasser und in der Folge mit einer bekannten, genau definierten Probe vorgenommen. Zu diesem Zweck eignet sich zum Beispiel ein definiert verdünnter Partikelgrößenstandard. Die Referenzmessungen geben Aufschluss über die Performance des Geräts und darüber ob die Spezifikationen des Geräts eingehalten werden. Dies betrifft die ersten drei Sinnbilder des Flussdiagramms.

Die Probenaufgabe gemäß dem vierten Sinnbild des Flussdiagramms der Fig.5 erfolgt entweder manuell oder durch ein separates automatisiertes Aufgabesystem. Nach der Probenaufgabe werden Kameraparameter ermittelt und elektronische Filtereinstellungen nach dem fünften Sinnbild des Flussdiagramms vorgenommen. Anhand von gemessenen Parametern, wie der Leitfähigkeit und der Temperatur, wird auf die Qualität der Befüllung und der angepassten Konzentration geschlossen. Hierzu werden auch Parameter aus der Voranalyse von Bildern herangezogen, wobei auch Veränderungen der Objekte über die Zeit berücksichtigt werden. Diese so genannten Qualitätsparameter wie Bildhelligkeit, Anzahl der detektierten Objekte, sowie die Form und Größe der Objekte, können Hinweise auf die Anwesenheit von Blasen oder sonstigen Störreflexen geben. So ergibt sich im Falle einer zu hohen Konzentration an Partikeln eine hohe Bildhelligkeit. In diesem Fall muss die Probe verdünnt und erneut in die Messzelle überführt werden.

Nach der Überprüfung der Qualitätsparameter der Probenfüllung erfolgt die Aufnahme einer Videosequenz und deren Abspeicherung gemäß dem sechsten Sinnbild Akquisition des Flussdiagramms.

Im siebten Sinnbild der Videoanalyse wird die Videosequenz entweder in Echtzeit oder zeitverzögert ausgewertet. Dazu wird die Videosequenz in ihre Einzelbilder zerlegt, die Objekte eines jeden Einzelbildes werden lokalisiert und deren Objekteigenschaften, wie die Helligkeit, die Größe oder die Form, bestimmt. Gemäß dem achten Sinnbild werden die Einzelobjekte zu Spuren ( so genannten Traces ) über die Einzelbilder zusammen geführt, welche neben den Daten des Versatzes mit den Daten der Objekteigenschaften verknüpft sind.

In der Ergebnisdarstellung gemäß dem neunten Sinnbild wird eine Größenverteilung (das heißt ein Histogramm ) dargestellt. Weiterhin wird unter Hinzunahme der Objekteigenschaften aus dem Bild eine so genannte mehrdimensionale Auswertung durch Methoden der multivarianten Statistik durchgeführt. Durch die Mehrdimensionalität ( Versatz, Größe der Objekte, Helligkeit und zeitliche Veränderung ) kann eine Probe in Subgruppen unterteilt werden. Somit kann auf die Anwesenheit von mehreren unterschiedlichen Probenbestandteilen geschlossen werden. Zudem gibt die Auswertung Auskunft über Messartefakte. Das Ergebnis wird dann um diese Messartefakte bereinigt. Zum Beispiel kann es sich hier um den Anteil der translationalen Diffusion, insbesondere von größeren Partikeln handeln.

Nach der Beendigung der Auswertung und der Ergebnisdarstellung kann entweder die Probe nochmals ausgewertet werden, zum Beispiel mit anderen Filterparametern, oder eine neue Probe injiziert und gemessen werden. Weiter kann das Programm beendet werden und das Gerät mit einer Sequenz heruntergefahren werden (Spülen ,Reinigung, Desinfektion).

### Bezugszeichenliste

- 1: Heiz - und Kühlelement (Peltier - Element)
- 2: Standsockel
- 3: optische Bezugslinie
- 4: schwingungsdämpfendes Element
- 5: Nano - Carbon - Schicht
- 6: Digitale Videokamera 6a Mikroskopobjektiv
- 7: Filterwechsler
- 8: Thermistor
- 9: Zellenwandung
- 10: Laser
- 11: optisches Glasfenster
- 12: Vorratsbehälter für Verdünnungslösung
- 13: Dosierpumpe für die Verdünnungslösung
- 14: Ausgleichsbehälter
- 15: Probenbehälter
- 16: Dosierpumpe für die Probe
- 17: Mischkammer
- 18: Miniatur -pH -Messsonde
- 19: Elektroden
- 20: Wechselscheibe
- 21: Größen - Peak als Kennzeichen für eine Translation
- 22: Größen - Peak als Kennzeichen für eine Rotation
- 23: Partikel

## Patentansprüche

1. Vorrichtung zur Erfassung und Charakterisierung von Partikeln (23) in Flüssigkeiten aller Art in der Größenordnung von Nanometern, mit
einer Zelle mit einer Zellwandung (9), wobei die Flüssigkeit sich als Suspension in der Zelle befindet, wobei die Zellwandung (9) einen rechteckigen Querschnitt aufweist, und wobei die Zellwandung (9) auf einer Querfläche auf einem Standsockel (2) aufliegt,
einer Bestrahlungseinrichtung, die die Zellwandung (9) auf der Querfläche, die der Querfläche, die das Auflager der Zellwandung (9) bildet, gegenüber liegt, in der Mitte durch ein optisches Glasfenster bestrahlt,
einer Beobachtungseinrichtung (6, 6a), die im rechten Winkel zur optischen Achse der Bestrahlungseinrichtung durch ein weiteres optisches Glasfenster beobachtet, und
einer Steuerungsvorrichtung, die den gemeinsamen Fokus der Bestrahlungseinrichtung und den Fokus der Beobachtungseinrichtung motorisch über den räumlichen Innenbereich der Zellwandung (9) in einen beliebigen Punkt verfährt,
wobei die Fläche der Zellwandung (9) die dem optischen Glasfenster durch das die Bestrahlungseinrichtung einstrahlt, gegenüber liegt, in der Mitte ein weiteres optisches Glasfenster aufweist,
**gekennzeichnet durch**
a) einen Schwingungsdämpfer (4), der den Standsockel (2) definiert lagert,
b) eine Nano-Carbon-Schicht (5), die von außen eine flächengleiche Fläche der Zellwandung (9), die dem optischen Glasfenster (11), durch das die Bestrahlungseinrichtung einstrahlt, gegenüber liegt, bedeckt,
c) zwei Thermistoren (8), die die Fläche der Zellwandung (9) in der sich das optische Glasfenster (11) durch das die optisehe Achse der Beobachtungseinrichtung verläuft, befindet, hinsichtlich ihrer Temperatur überwachen, wobei die Zellwandung (9) aus schwarzem Glas mit eingesinterten optischen Fenstern (11) besteht und auf einer Längsfläche und der angrenzenden Querfläche, die das Auflager der Zellwandung (9) bildet, mit einem L-förmigen Heiz- und Kühlelement (1) belegt ist,
d) zwei Elektroden (19), die jeweils eine der beiden Stirnseiten der quaderförmigen Zellwandung (9) mit einer elektrischen Spannungsquelle belegen, wobei jede dieser Elektroden (19) aus einer äußeren und einer zugehörigen inneren Elektrode besteht, und
e) einer Anordnung (7), die in der optischen Achse der Beobachtungseirichtung vorgesehen ist und das Schalten verschiedener Filter in den Strahlengang ermöglicht.

2. Vorrichtung nach Anspruch 1, **dadurch gekennzeichnet, dass** die Bestrahlungseinrichtung ein Laser (10) und die Beobachtungseinrichtung eine digitale Videokamera (6) mit einem Mikroskopobjektiv (6a) ist.

3. Vorrichtung nach Anspruch 1 oder 2, **dadurch gekennzeichnet,**
**dass** an der einen Stirnseite der quaderförmigen Zellwandung (9) ein Vorratsbehälter (12) Spüllösungen bzw. Verdünnungslösungen mit einer anschließenden Dosierpumpe (13) und an der anderen Stirnseite ein Ausgleichsbehälter (14) für ProbenFlüssigkeit vorgesehen ist, wobei ein zusätzlicher Probenbehälter (15) mit einer zugehörigen Dosierpumpe (16) vorgesehen ist, und wobei aus dem Vorratsbehälter (12) und dem Probenbehälter (15) Flüssigkeiten einer Mischkammer (17) dosiert zugeführt werden können, und wobei im Bereich der Mischkammer (17) ein Miniatur-pH-Messsonde angebracht ist.

4. Verfahren zur Partikel Tracking Analyse mit Hilfe von Streulicht von Partikeln (23) in der Größenordnung von Nanometern, mit der Vorrichtung nach einem der Ansprüche 1 bis 3, wobei die Flüssigkeit sich als Suspension in einer Zelle mit einer Zellwandung (9) befindet, mit den folgenden Merkmalen:
a) die Zellwandung (9) wird über Schwingungsdämpfer (4) definiert positioniert, wobei die Zellwandung (9) aus schwarzem Glas besteht in das für den Erfassungsprozess optische Glasfenster (11) eingelassen sind,
b) die Zellwandung (9) wird über eine optische Bestrahlungseinrichtung durch ein optisches Glasfenster (11) bestrahlt und im rechten Winkel zur optischen Achse der Bestrahlungseinrichtung durch ein weiteres optisches Glasfenster (11) von einer Beobachtungseinrichtung beobachtet,
c) der Fokus der Bestrahlungseinrichtung und der Fokus der Beobachtungseinrichtung werden motorisch in einem bestimmten Bereich der Zellwandung (9) auf denselben Punkt verfahren indem in diesem Bereich die Abbildungseigenschaft bezüglich eines oder mehrerer Partikel (23) optimiert wird, wobei der Elektrophoreseeffekt deutlich vom Elektroosmoseeffekt auseinander gehalten wird,
d) die hierdurch erhaltenen Steuerungsparameter werden als Grundlage für die Darstellung von Partikeln (23) verwendet, wobei gleichzeitig das Zetapotential der Probe, deren Leitfähigkeit und deren pH-Wert messtechnisch erfasst werden, wobei die Bestrahlungseinrichtung aus einem Laser (10) und die Beobachtungseinrichtung aus einer digitalen Videokamera (6) mit einem Mikroskopobjektiv bestehen, und wobei der Wärmeeinfluss der Lichteinstrahlung der Bestrahlungseinrichtung auf die Suspension dadurch minimiert wird, dass dem Lichtstrahl der Bestrahlungseinrichtung durch ein, dem optischen Glasfenster (11), das den Eintritt des Lichts der Bestrahlungseinrichtung in die Zellwandung (9) ermöglicht, gegenüber liegendes weiteres Glasfenster (11), der Austritt aus der Zellwandung (9) ermöglicht wird und dieser in einer Nano-Carbon-Schicht (5) seine Wärme abgeben kann.

5. Verfahren nach Anspruch 4, **dadurch gekennzeichnet,**
**dass** bei der Messung und der Analyse mit der Vorrichtung nach einem der Ansprüche 1 bis 3 folgende Verfahrensschritte zu unterscheiden sind:
a) Nach dem Start und der Inbetriebnahme werden zur Initialisierung die Sensoren und Aktoren angesprochen und deren Referenzwerte ausgelesen, wobei für eine Probenaufnahme zuerst Referenzmessungen mit reinem Wasser und/oder einer definierten Probe vorgenommen werden;
b) Nach der Probenaufnahme werden Kameraparameter ermittelt und elektronische Filtereinstellungen vorgenommen;
c) Nach der Überprüfung der Qualitätsparameter der Probenfüllung erfolgt die Aufnahme einer Videosequenz und deren Abspeicherung gemäß dem Sinnbild der Akquisition;
d) Als nächster Verfahrensschritt wird die Videosequenz entweder in Echtzeit oder zeitverzögert ausgewertet;
e) Gemäß dem nächsten Verfahrensschritt werden die Einzelobjekte zu Spuren über die Einzelbilder zusammen geführt, welche neben den Daten des Versatzes mit den Daten der Objekteigenschaften verknüpft sind;
f) In der Ergebnisdarstellung wird eine Größenverteilung dargestellt und eine mehrdimensionale Auswertung durch Methoden der multivarianten Statistik durchgeführt;
g) Als Folge wird entweder die Probe nochmals mit anderen Filterparametern ausgewertet werden oder eine neue Probe gemessen; und
h) Die Vorrichtung wird ausgeschaltet.

## Claims

1. Apparatus for detecting and characterizing particles (23) in liquids of any kind of the order of nanometres, comprising
a cell having a cell wall (9), wherein the liquid is situated in the cell as a suspension, wherein the cell wall (9) has a rectangular cross section, and wherein the cell wall (9) rests on a transverse face on a stand base (2),
an irradiation device which irradiates the cell wall (9) on the transverse face which faces the transverse face forming the support of the cell wall (9) through an optical glass window in the centre,
an observation device (6, 6a) which observes at a right angle to the optical axis of the irradiation device through a further optical glass window, and
a control device which moves the common focus of the irradiation device and the focus of the observation device in a motorized manner across the spatial interior of the cell wall (9) to any point,
wherein the face of the cell wall (9) which faces the optical glass window through which the irradiation device irradiates has a further optical glass window in the centre,
**characterized by**
a) a vibration damper (4) which positions the stand base (2) in a defined manner,
b) a nanocarbon layer (5) which covers from the outside a coextensive face of the cell wall (9) which faces the optical glass window (11) through which the irradiation device irradiates,
c) two thermistors (8) which monitor the temperature of the face of the cell wall (9) in which there is situated the optical glass window (11) through which the optical axis of the observation device runs, wherein the cell wall (9) consists of black glass having optical windows (11) sintered therein and is covered by an L-shaped heating and cooling element (1) on a longitudinal face and the adjoining transverse face forming the support of the cell wall (9),
d) two electrodes (19) which each provide one of the two end faces of the cuboid cell wall (9) with an electrical voltage source, wherein each of said electrodes (19) consists of an outer electrode and an associated inner electrode, and
e) an arrangement (7) which is provided in the optical axis of the observation device and allows the switching of various filters in the beam path.

2. Apparatus according to Claim 1, **characterized in that** the irradiation device is a laser (10) and the observation device is a digital video camera (6) having a microscope objective (6a).

3. Apparatus according to Claim 1 or 2, **characterized in that**
one of the end faces of the cuboid cell wall (9) is provided with a storage reservoir (12) rinse solutions or dilution solutions having an adjacent metering pump (13) and the other end face is provided with a compensation reservoir (14) for sample liquid, wherein an additional sample reservoir (15) having an associated metering pump (16) is provided, and wherein liquids can be fed in a metered manner from the storage reservoir (12) and the sample reservoir (15) into a mixing chamber (17), and wherein a miniature pH measurement probe is mounted in the region of the mixing chamber (17).

4. Method for particle tracking analysis using scattered light of particles (23) of the order of nanometres, using the apparatus according to any of Claims 1 to 3, wherein the liquid is situated as a suspension in a cell having a cell wall (9), comprising the following features:
a) the cell wall (9) is positioned in a defined manner by means of vibration dampers (4), wherein the cell wall (9) consists of black glass in which optical glass windows (11) for the detection process have been set,
b) the cell wall (9) is irradiated through an optical glass window (11) by means of an optical irradiation device and observed at a right angle to the optical axis of the irradiation device through a further optical glass window (11) by an observation device,
c) the focus of the irradiation device and the focus of the observation device are moved in a motorized manner in a certain region of the cell wall (9) to the same point by the imaging property regarding one or more particles (23) being optimized in this region, wherein the electrophoresis effect is clearly distinguished from the electroosmosis effect,
d) the control parameters obtained thereby are used as the basis for the depiction of particles (23), wherein at the same time the zeta potential of the sample, the conductivity thereof and the pH thereof are acquired by measurement, wherein the irradiation device consists of a laser (10) and the observation device consists of a digital video camera (6) having a microscope objective, and wherein the influence of heat of the light radiation of the irradiation device on the suspension is minimized by making it possible for the light beam of the irradiation device to exit from the cell wall (9) through a further glass window (11) which faces the optical glass window (11) allowing the entry of the light of the irradiation device into the cell wall (9) and by said light beam being able to emit its heat in a nanocarbon layer (5).

5. Method according to Claim 4, **characterized in that**, in the measurement and the analysis using the apparatus according to any of Claims 1 to 3, a distinction is to be made between the following method steps:
a) after the start and initial start-up, the sensors and actuators are addressed and the reference values thereof are read for initialization, wherein reference measurements with pure water and/or a defined sample are performed first for a sample acquisition;
b) after the sample acquisition, camera parameters are ascertained and electronic filter adjustments are made;
c) after the checking of the quality parameters of sample filling, the recording of a video sequence and the saving thereof are effected as per the symbol of acquisition;
d) as the next method step, the video sequence is evaluated either in real-time or with a time-delay;
e) according to the next method step, the individual objects are combined to form traces over the individual images, which are linked with the data of the object properties in addition to the data of the offset;
f) in the depiction of the result, a size distribution is depicted and a multidimensional evaluation is carried out by methods of multivariate statistics;
g) as a consequence, either the sample is evaluated again using different filter parameters or a new sample is measured; and
h) the apparatus is switched off.

## Revendications

1. Dispositif de détection et de caractérisation de particules (23) dans des liquides de toutes sortes de l'ordre de grandeur du nanomètre, ledit dispositif comprenant
une cellule pourvue d'une paroi de cellule (9), le liquide se trouvant dans la cellule sous la forme d'une suspension, la paroi de cellule (9) ayant une section transversale rectangulaire, et la paroi de cellule (9) venant en appui sur une surface transversale d'un socle (2),
une unité d'irradiation qui irradie, au milieu à travers une fenêtre en verre optique, la paroi de cellule (9) sur la surface transversale qui se trouve en face de la surface transversale qui forme le support de la paroi de cellule (9),
une unité d'observation (6, 6a) qui observe à travers une autre fenêtre en verre optique à angle droit par rapport à l'axe optique de l'organe d'irradiation, et
une unité de commande qui déplace le foyer commun de l'unité d'irradiation et le foyer de l'unité d'observation par le biais d'un moteur sur la zone intérieure tridimensionnelle de la paroi de cellule (9) jusqu'à un point quelconque,
la surface de la paroi de cellule (9) qui est opposée à la fenêtre en verre optique à travers laquelle l'unité d'irradiation irradie, comportant au milieu une autre fenêtre en verre optique,
**caractérisé par**
a) un amortisseur de vibrations (4) qui supporte le socle (2) d'une manière définie,
b) une couche de nano-carbone (5) qui recouvre de l'extérieur une même surface de la paroi de cellule (9) qui est située en face de la fenêtre en verre optique (11) à travers laquelle l'unité d'irradiation irradie,
c) deux thermistances (8) qui surveillent en termes de température la surface de la paroi de cellule (9) dans laquelle se trouve la fenêtre en verre optique (11) à travers laquelle s'étend l'axe optique de l'unité d'observation, la paroi de cellule (9) étant en verre noir pourvu de fenêtres optiques frittées (11) et étant recouverte d'un élément chauffant et refroidissant (1) en forme de L sur une surface longitudinale et la surface transversale adjacente qui forme le support de la paroi de cellule (9),
d) deux électrodes (19) qui dotent chacune une des deux faces frontales de la paroi de cellule cubique (9) d'une source de tension électrique, chacune de ces électrodes (19) comprenant une électrode externe et une électrode interne associée, et
e) un agencement (7) qui est prévu dans l'axe optique de la direction d'observation et qui permet d'amener divers filtres dans le trajet de faisceau.

2. Dispositif selon la revendication 1, **caractérisé en ce que** l'unité d'irradiation est un laser (10) et l'unité d'observation est une caméra vidéo numérique (6) pourvue d'un objectif de microscope (6a).

3. Dispositif selon la revendication 1 ou 2, **caractérisé en ce que**
un réservoir de stockage (12) solutions de rinçage ou solutions de dilution auquel est raccordée une pompe doseuse (13) est prévu sur une face frontale de la paroi de cellule cubique (9) et un réservoir de compensation (14) destiné à un liquide échantillon est prévu sur l'autre face frontale, un récipient d'échantillon supplémentaire (15) étant prévu qui est pourvu d'une pompe doseuse associée (16), et des liquides pouvant être amenés de manière dosée du réservoir de stockage (12) et du réservoir d'échantillon (15) à une chambre de mélange (17), et une sonde de mesure de pH miniature étant fixée dans la zone de la chambre de mélange (17).

4. Procédé d'analyse de suivi de particules à l'aide de lumière diffusée de particules (23) de l'ordre de grandeur du nanomètre, au moyen du dispositif selon l'une des revendications 1 à 3, le liquide se trouvant sous la forme d'une suspension dans une cellule pourvue d'une paroi de cellule (9), le procédé présentant les caractéristiques suivantes :
a) la paroi de cellule (9) est positionnée de manière définie par le biais d'amortisseurs de vibrations (4), la paroi de cellule (9) étant en verre noir dans lequel des fenêtres en verre optique (11) sont ménagées pour le processus de détection,
b) la paroi de cellule (9) est irradiée par le biais d'une unité d'irradiation optique à travers une fenêtre en verre optique (11) et est observée par une unité d'observation à angle droit par rapport à l'axe optique de l'unité d'irradiation à travers une autre fenêtre en verre optique (11),
c) le foyer de l'unité d'irradiation et le foyer de l'unité d'observation sont déplacés au même point par un moteur dans une zone déterminée de la paroi de cellule (9) par optimisation, dans cette zone, de la propriété de reproduction vis-à-vis d'une ou plusieurs particules (23), l'effet d'électrophorèse étant clairement séparé de l'effet d'électro-osmose,
d) les paramètres de contrôle ainsi obtenus servent de base à la représentation de particules (23), le potentiel zêta de l'échantillon, sa conductivité et sa valeur de pH étant détectés en même temps par une technique de mesure, l'unité d'irradiation comprenant un laser (10) et l'unité d'observation comprenant une caméra vidéo numérique (6) pourvue d'un objectif de microscope, et l'influence thermique de l'irradiation lumineuse de l'unité d'irradiation sur la suspension étant minimisée par le fait que le faisceau lumineux de l'unité d'irradiation peut sortir de la paroi de cellule (9) à travers une autre fenêtre en verre (11) qui est située en face de la fenêtre en verre optique (11) qui permet à la lumière de l'unité d'irradiation d'entrer dans la paroi de cellule (9), et peut dégager sa chaleur dans une couche de nano-carbone (5).

5. Procédé selon la revendication 4, **caractérisé en ce que**, lors de la mesure et de l'analyse au moyen du dispositif selon l'une des revendications 1 à 3, le procédé comporte les étapes distinctes suivantes :
a) après le démarrage et la mise en service, les capteurs et les actionneurs sont initialisés et leurs valeurs de référence sont lues, des mesures de référence étant d'abord effectuées avec de l'eau pure et/ou un échantillon défini pour le prélèvement d'un échantillon ;
b) après avoir prélevé l'échantillon, les paramètres de la caméra sont déterminés et les réglages du filtre électronique sont effectués ;
c) après vérification des paramètres de qualité du remplissage de l'échantillon, une séquence vidéo est enregistrée et sauvegardée conformément au symbole d'acquisition ;
d) à l'étape suivante, la séquence vidéo est évaluée en temps réel ou avec un retard ;
e) selon l'étape suivante du procédé, les objets individuels sont rassemblés pour former des traces par le biais des images individuelles, lesquelles traces sont combinées, en plus des données du décalage, aux données des propriétés des objets ;
f) dans la présentation des résultats, une distribution dimensionnelle est indiquée et une évaluation multidimensionnelle est effectuée à l'aide de méthodes de la statistique à variables multiples ;
g) en conséquence, l'échantillon est à nouveau évalué avec des paramètres de filtre différents, ou un nouvel échantillon est mesuré ; et
h) le dispositif est arrêté.
